# EUROPÄISCHE PATENTSCHRIFT

(11) **EP 0 731 129 B1**
(45) Veröffentlichungstag und Bekanntmachung des Hinweises auf die Patenterteilung: **26.04.2000**
(21) Anmeldenummer: 95250057.7
(22) Anmeldetag: 10.03.1995
(51) Int. Cl.: C08J 3/28, C08F 8/00

(54) **Verwendung eines polymeren Werkstoffs**
Use of a polymer material
Utilisation de matériaux polymères

(43) Veröffentlichungstag der Anmeldung: 11.09.1996
(73) Patentinhaber: ARPLAS Gesellschaft für Plasmatechnologie mbH, 06766 Wolfen-Thalheim (DE)
(72) Erfinder: Berger, Steffen Dr., D-40625 Düsseldorf (DE)
(74) Vertreter: Schneider, Henry

(56) Entgegenhaltungen:
- WO-A-94/15264
- DE-A- 4 141 805
- US-A- 3 834 038
- US-A- 4 338 420
- US-A- 4 626 473
- US-A- 5 234 723

## Beschreibung

Es sind Verbunde bekannt, bei denen zur Erzielung bestimmter Eigenschaften Werkstoffe mit unterschiedlichen Eigenschaften miteinander verbunden werden, von denen wenigstens ein Werkstoff ein Polyolefin ist. Dies können beispielsweise Folien sowie massive Werkstoffe der unterschiedlichsten Art, beispielsweise Metalle, Nichtmetalle, Glas sein. Soll beispielsweise eine Polyamid-Folie und Polyethylen-Folie zu einer Verbundfolie zusammengefügt werden, ist wie bei der Herstellung der meisten Polyolefinverbunde derzeit der Einsatz eines Haftvermittlers notwendig, da die Herstellung von Polyolefinverbunden durch die Unpolarität der Polyolefine sehr erschwert wird. Je nach Größe und Art des herzustellenden Polyolefinverbundes ist dabei der Einsatz einer mehr oder weniger großen Menge des Haftvermittlers notwendig. Diese Haftvermittler sind immer nur für relativ eng begrenzte Anwendungsfälle einsetzbar. Weiterhin ist nachteilig, daß um so größer die Menge des eingesetzten Haftvermittlers ist, eine Beeinträchtigung der gewünschten Eigenschaften des herzustellenden Polyolefinverbundes auftritt. Darüber hinaus ist nachteilig, daß bei einem eventuellen Recycling der Polyolefinverbunde die eingesetzten Haftvermittler Probleme bereiten. Oftmals ist eine nur sehr schwierig durchzuführende Trennung der einzelnen Bestandteile des Polyolefinverbundes notwendig.

Weiterhin ist die Herstellung von Compounds bekannt, bei denen wenigstens zwei Polymere als Komponenten miteinander vermischt werden. Die Herstellung von Polyolefincompounds wird durch die Unpolarität der Polymere sehr erschwert, so daß häufig Entmischungserscheinungen auftreten, die die Einsetzbarkeit der Compounds beeinträchtigen, beziehungsweise die Herstellung bestimmter Compounds unmöglich machen. Bei der Herstellung von Polyolefincompounds werden derzeit in der Regel Verträglichkeitsvermittler eingesetzt. Diese Verträglichkeitsvermittler sind meist Copolymere des Polyethylens. Hierbei ist kritisch, daß die bekannten Verträglichkeitsvermittler jeweils nur zur Herstellung bestimmter Polyolefincompounds geeignet sind.

Die DE 41 41 805 beschreibt ein Verfahren und eine Vorrichtung zur Herstellung von thermoplastischen Kunststoffteilen, wobei die Kunststoffteile aus einem granulatförmigen Kunststoff geformt werden, der einer Niedertemperatur-Plasmabehandlung unterzogen wurde. Hierdurch soll sich eine Verbesserung von Oberflächeneigenschaften der Kunststoffteile ergeben.

Die US-PS 4,626,473 beschreibt ein Verfahren zur Oberflächenbehandlung von granulatförmigen Polyolefinen mittels eines Niedertemperatur-Plasmas.

Die WO 95 03344 beschreibt ein Verfahren zur Herstellung eines als Pulverbeschichtungsmaterial und/oder Schmelzkleber einsetzbaren Kunststoffes, wobei Polyolefine einer Niedertemperatur-Plasmabehandlung unterzogen werden.

Der Erfindung liegt die Aufgabe zugrunde, einen polymeren Werkstoff zu schaffen, der einfach und kostengünstig herstellbar ist und dessen Eigenschaften für den speziellen Verwendungszweck als Haftvermittler, Polyolefinverbunde eingestellt werden können.

Erfindungsgemäß ist die Verwendung eines mittels einer Niedertemperatur-Plasmabehandlung von Polyolefinen erhältlichen polymeren Werkstoffs als Haftvermittler für Polyolefinverbunde vorgesehen. Damit wird der Einsatz von Haftvermittlern reduziert, die Verbundfestigkeit erhöht und die Verträglichkeit der Haftvermittler in Polyolefinverbunden verbessert. Außerdem erweitert sich dadurch das Spektrum der herstellbaren Polyolefinverbunde.

Bevorzugt ist, daß die polymeren Werkstoffe durch eine Niedertemperatur-Plasmabehandlung von Polyolefinen in einem Frequenzbereich von 5 kHz bis 10 GHz hergestellt werden. Unter Niedertemperatur-Plasmabehandlung wird hier verstanden, daß das zu behandelnde Material selbst nicht über einen bestimmtem Temperaturbereich, beispielsweise 40 °C - 60 °C, hinaus erwärmt wird. Es wurde überraschenderweise gefunden, daß die so hergestellten polymeren Werkstoffe als Haftvermittler für unterschiedlichste Polyolefinverbunde verwendet werden können. Der Einsatz der Haftvermittler kann drastisch reduziert werden. Das Spektrum der herstellbaren Polyolefinverbunde kann erweitert werden. Bei der erfindungsgemäßen Verwendung polymerer Werkstoffe bei der Herstellung von Polyolefincompounds wird eine Erhöhung der Verträglichkeit der Polyolefinkomponenten vor allem mit polaren Polymeren erreicht. Der Einsatz eines zusätzlichen Verträglichkeitsvermittlers kann bei vielen Anwendungen unterbleiben. Weiterhin hat sich überraschend gezeigt, daß das Spektrum der herstellbaren Compounds erweitert werden kann. Darüber hinaus ist sehr vorteilhaft möglich, bei der Herstellung von Compounds aus unbehandelten Polyolefinen die erfindungsgemäße Verwendung polymerer Werkstoffe als Verträglichkeitsvermittler vorzusehen.

Als weiterer wesentlicher Vorteil ergibt sich, daß bei einem eventuellen Recycling von Polyolefinverbunden und Polyolefincompounds, die die erfindungsgemäße Verwendung polymerer Werkstoffe als Komponente und/oder als Haft- bzw. Verträglichkeitsvermittler anwenden, eine Separierung einzelner Bestandteile unterbleiben kann. Im Gegenteil, bei einem Recycling beispielsweise mit einem thermoplastischen Verarbeitungsverfahren (Extrudieren, Spritzgießen o.ä.) können die im Recyclingmaterial enthaltenen erfindungsgemäßen polymeren Werkstoffe ihre überraschenden und vorteilhaften Wirkungen in puncto Verträglichkeit in einem zweiten Reaktionsschritt nochmals entfalten.

Besonders bevorzugt ist die Verwendung eines polymeren Werkstoffs, in den durch die Niedertemperatur-Plasmabehandlung sauerstoff- und/oder stickstoffhaltige Gruppen eingebaut worden sind. Dies wird sehr vorteilhaft dadurch erreicht, daß die Polyolefine beispielsweise einer Behandlung mit einem Sauerstoffund/oder Stickstoffplasma und/oder einem Plasma aus einem Gemisch dieser beiden Gase unterworfen werden.

Eine besonders bevorzugte Verwendung eines polymeren Werkstoffs wird erhalten, wenn die Niedertemperatur-Plasmabehandlung der Polyolefine mit wechselnden Frequenzen, vorzugsweise mit Kombinationen verschieden hoher wechselnder Frequenzen, durchgeführt wird. Hierbei kann sehr vorteilhaft unter gleichzeitiger Behandlung mit einem Reaktionsgasplasma (Sauerstoffplasma und/oder Stickstoffplasma) und/oder einem Reaktionsgasgemischplasma auf einen unterschiedlichen chemischen Aufbau und unterschiedliche Zusammensetzungen der als Ausgangsstoffe dienenden Polyolefine eingegangen werden. Es hat sich gezeigt, daß durch das gefundene Verfahren der Anteil an polaren Gruppen entscheidend erhöht werden kann und sich somit ein wesentlicher, vollkommen überraschender Qualitätssprung beim Einsatz der behandelten Polyolefine einstellt.

Weitere bevorzugte Ausgestaltungen der Erfindung ergeben sich aus den übrigen, in den Unteransprüchen angegebenen Merkmalen.

Die Erfindung wird nachfolgend in einem Ausführungsbeispiel anhand der zugehörigen Zeichnung, die einen Verfahrensablauf zur Herstellung eines erfindungsgemäß zu verwendenden polymeren Werkstoffs in einem Flußdiagramm zeigt, näher erläutert.

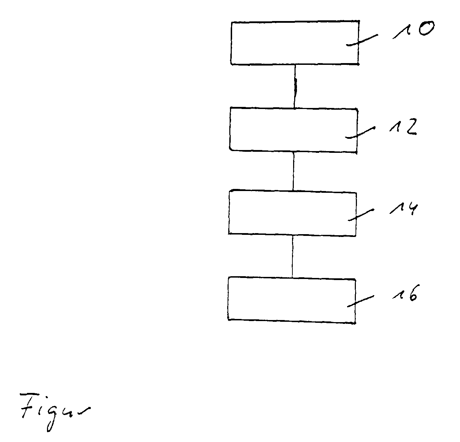

In der Figur soll das Verfahren mit Hilfe des Diagramms verdeutlicht werden. In einem ersten Schritt 10 werden die als Ausgangsmaterialien zur Verfügung stehenden Polyolefine vorbereitet. Die Polyolefine werden hier in Pulver- und/oder Granulatform gebracht, deren Körnungsgröße beispielsweise kleiner als 1 mm ist. Als Ausgangsmaterialien können sowohl neuwertige Polyolefine als auch aus Recyclingmaterial gewonnene Polyolefine verwendet werden. Bei Polyolefinen aus Recyclingmaterial ist zu beachten, daß diese nicht zu stark geschädigt sind, das heißt, daß noch eine geeignete Molekularstruktur vorhanden ist. Vor der Plasmabehandlung können den Polyolefinen übliche Kunststoffzusätze, wie Stabilisatoren, zugesetzt werden. In einem nächsten Schritt 12 wird das vorbereitete Ausgangsmaterial in eine Prozeßkammer gegeben. Die Prozeßkammer kann dabei beispielsweise eine Drehtrommel eines an sich bekannten Plasmaofens zur Durchführung einer Niedertemperatur-Plasmabehandlung sein.

In einem nächsten Schritt 14 werden die für die Behandlung des Ausgangsmaterials gewünschten Prozeßparameter und Prozeßgase eingestellt. Hierbei werden insbesondere die speziellen Kombinationen der Prozeßgase, das heißt beispielsweise eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff, oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitlicher Abfolge. So sind Varianten denkbar, in der erst mit einer niederen Frequenz, beispielsweise 13,56 MHz, und anschließend mit einer höheren Frequenz, beispielsweise 2,45 GHz, eine Plasmabehandlung durchgeführt wird. Darüber hinaus ist eine alternierende Zuschaltung der Frequenzen denkbar. Selbstverständlich können auch andere Frequenzen in beliebiger frei wählbarer Reihenfolge zur Durchführung der Plasmabehandlung eingestellt werden. Im übrigen wird die gewünschte Drehzahl der Drehtrommel, beispielsweise im Bereich zwischen 4 und 20 Umdrehungen/Minute, sowie der gewünschte Prozeßdruck, der beispielsweise im Bereich zwischen 0,1 mbar und 2 mbar, insbesondere zwischen 0,3 mbar und 1 mbar liegt, eingestellt. Während der Plasmabehandlung kann der Prozeßdruck verfahrensbedingt Schwankungen unterliegen. Weiterhin wird die Behandlungsdauer festgelegt, mit der die Behandlung des Ausgangsmaterials erfolgt. Diese beträgt beispielsweise zwischen 5 Sekunden und 800 Sekunden, insbesondere zwischen 15 und 600 Sekunden. Die genannten Prozeßparameter bzw. Prozeßgase können untereinander in beliebiger Zusammenstellung variiert werden und sind insbesondere auf die Zusammensetzung des jeweiligen konkret vorliegenden Ausgangsmaterials, also der Polyolefine, sowie auf den gewünschten Verwendungszweck des Endproduktes abgestimmt.

In einem nächsten Schritt 16 erfolgt dann die Plasmabehandlung des Ausgangsmaterials mit den in dem Schritt 14 eingestellten Prozeßparametern bzw. Prozeßbedingungen. Hierbei ist es ebenfalls denkbar, daß während der Plasmabehandlung in dem Schritt 16 eine Veränderung und/oder Anpassung der Prozeßparameter, beispielsweise durch eine Regelung, erfolgen kann. Durch die beschriebene Kombination der Prozeßgase und der Prozeßparameter der Niedertemperatur-Plasmabehandlung ist insbesondere der für die Verwendung der erfindungsgemäßen polymeren Werkstoffe wünschenswerte Einbau von sauerstoff- und/oder stickstoffhaltigen Gruppen in die Polyolefine in Abhängigkeit von dem eingesetzten Ausgangsmaterial erreichbar. Die erfindungsgemäß verwendeten polymeren Werkstoffe können aus allen zur Gruppe der Polyolefine gehörenden Verbindungen, beispielsweise aus allen Polyethylentypen (LDPE, LLDPE, HDPE) sowie Polypropylen hergestellt werden.

Mit den polymeren Werkstoffen kann jeder denkbare Polyolefinverbund hergestellt werden, wobei die behandelten Polyolefine als Verbundkomponenten und/oder Haftvermittler eingesetzt werden. Weiterhin ist der Einsatz der polymeren Werkstoffe als vollkommen neuartige Verträglichkeitsvermittler bei der Herstellung von Polyolefincompounds oder direkt als Compoundkomponente möglich.

## Patentansprüche

1. Verwendung eines mittels einer Niedertemperatur-Plasmabehandlung von Polyolefinen erhältlichen polymeren Werkstoffs als Haftvermittler für Polyolefinverbunde.

2. Verwendung nach Anspruch 1, **dadurch gekennzeichnet,** daß die Niedertemperatur-Plasmabehandlung in einem Frequenzbereich von 5 kHz bis 10 GHz durchgeführt wird.

3. Verwendung nach Anspruch 2, **dadurch gekennzeichnet,** daß die Plasmabehandlung in einem Frequenzbereich von 13,56 MHz bis 2,45 GHz durchgeführt wird.

4. Verwendung nach einem der vorhergehenden Ansprüche, **dadurch gekennzeichnet,** daß die Plasmabehandlung mit wechselnden Frequenzen durchgeführt wird.

5. Verwendung nach einem der vorhergehenden Ansprüche, **dadurch gekennzeichnet,** daß die Plasmabehandlung mit Kombinationen verschieden hoher wechselnder Frequenzen durchgeführt wird.

6. Verwendung nach einem der vorhergehenden Ansprüche, **dadurch gekennzeichnet,** daß als Polyolefine Polyethylen und/oder Polypropylen eingesetzt werden.

7. Verwendung nach einem der vorhergehenden Ansprüche, **dadurch gekennzeichnet,** daß die Plasmabehandlung unter Zufuhr eines Inertgases durchgeführt wird.

8. Verwendung nach Anspruch 7, **dadurch gekennzeichnet,** daß als Inertgas Helium und/oder Argon verwendet wird.

9. Verwendung nach einem der vorhergehenden Ansprüche, **dadurch gekennzeichnet,** daß die Plasmabehandlung unter Zufuhr eines Reaktionsgases durchgeführt wird.

10. Verwendung nach Anspruch 9, **dadurch gekennzeichnet,** daß als Reaktionsgas Sauerstoff und/oder Stickstoff verwendet wird.

11. Verwendung nach einem der vorhergehenden Ansprüche, **dadurch gekennzeichnet,** daß die Plasmabehandlung nacheinander mit einem Inertgasplasma und wenigstens einem Reaktionsgasplasma oder wenigstens einem Reaktionsgasgemischplasma oder unter Zufuhr eines Gemisches aus wenigstens einem Inertgas und wenigstens einem Reaktionsgas durchgeführt wird.

12. Verwendung nach einem der vorhergehenden Ansprüche, **dadurch gekennzeichnet,** daß die Plasmabehandlung bei einem Prozeßdruck von 0,1 mbar bis 2 mbar erfolgt.

13. Verwendung nach Anspruch 12, **dadurch gekennzeichnet,** daß die Plasmabehandlung bei einem Prozeßdruck von 0,3 mbar bis 1 mbar erfolgt.

14. Verwendung nach einem der vorhergehenden Ansprüche, **dadurch gekennzeichnet,** daß die Dauer der Plasmabehandlung 5 Sekunden bis 800 Sekunden beträgt.

15. Verwendung nach Anspruch 14, **dadurch gekennzeichnet,** daß die Dauer der Plasmabehandlung 15 Sekunden bis 600 Sekunden beträgt.

16. Verwendung nach einem der vorhergehenden Ansprüche, **dadurch gekennzeichnet,** daß die Polyolefine als Pulver oder Granulat der Plasmabehandlung unterworfen werden.

17. Verwendung nach einem der vorhergehenden Ansprüche, **dadurch gekennzeichnet,** daß die Polyolefine während der Plasmabehandlung bewegt werden.

18. Verwendung nach Anspruch 17, **dadurch gekennzeichnet,** daß die Polyolefine in einer Drehtrommel mit 4 bis 20 Umdrehungen/Minute umgewälzt werden.

19. Verwendung nach einem der vorhergehenden Ansprüche, **dadurch gekennzeichnet,** daß die Polyolefine in Form von Neuware und/oder Recyclingware eingesetzt werden.

20. Verwendung nach einem der vorhergehenden Ansprüche, **dadurch gekennzeichnet,** daß den Polyolefinen vor der Plasmabehandlung übliche Kunststoff zusätze zugesetzt werden.

21. Verwendung nach Anspruch 20, **dadurch gekennzeichnet,** daß Stabilisatoren zugesetzt werden.

## Claims

1. Use of a polymeric material, obtainable by a low-temperature plasma treatment of polyolefins, as a bonding agent for polyolefin compositions.

2. Use according to Claim 1, **characterised in that** the low-temperature plasma treatment is performed within a frequency range of 5 kHz to 10 GHz.

3. Use according to Claim 2, **characterised in that** the plasma treatment is performed within a frequency range of 13.56 MHz to 2.45 GHz.

4. Use according to one of the preceding claims, **characterised in that** the plasma treatment is performed with changing frequencies.

5. Use according to one of the preceding claims, **characterised in that** the plasma treatment is performed with combinations of variably high changing frequencies.

6. Use according to one of the preceding claims, **characterised in that** polyethylene and/or polypropylene are used as polyolefins.

7. Use according to one of the preceding claims, **characterised in that** the plasma treatment is performed while an inert gas is supplied.

8. Use according to Claim 7, **characterised in that** helium and/or argon is used as inert gas.

9. Use according to one of the preceding claims, **characterised in that** the plasma treatment is performed while a reaction gas is supplied.

10. Use according to Claim 9, **characterised in that** oxygen and/or nitrogen is used as reaction gas.

11. Use according to one of the preceding claims, **characterised in that** the plasma treatment is performed successively with an inert gas plasma and at least one reaction gas plasma or at least one reaction-gas mixture plasma or while a mixture of at least one inert gas and at least one reaction gas is supplied.

12. Use according to one of the preceding claims, **characterised in that** the plasma treatment takes place at a process pressure of 0.1 mbar to 2 mbar.

13. Use according to one Claim 12, **characterised in that** the plasma treatment takes place at a process pressure of 0.3 mbar to 1 mbar.

14. Use according to one of the preceding claims, **characterised in that** the duration of the plasma treatment is 5 seconds to 800 seconds.

15. Use according to Claim 14, **characterised in that** the duration of the plasma treatment is 15 seconds to 600 seconds.

16. Use according to one of the preceding claims, **characterised in that** the polyolefins are subjected to the plasma treatment as powder or granules.

17. Use according to one of the preceding claims, **characterised in that** the polyolefins are moved during the plasma treatment.

18. Use according to Claim 17, **characterised in that** the polyolefins are rotated in a rotating drum at a speed of 4 to 20 revolutions/minute.

19. Use according to one of the preceding claims, **characterised in that** the polyolefins are introduced in the form of new goods and/or recycling goods.

20. Use according to one of the preceding claims, **characterised in that** conventional plastics additives are added to the polyolefins prior to the plasma treatment.

21. Use according to Claim 20, **characterised in that** stabilisers are added.

## Revendications

1. Utilisation d'un matériau polymère pouvant être obtenu au moyen d'un traitement de polyoléfines au plasma à basse température, en tant qu'agent adhésif ou agent de pontage pour des polyoléfines composites.

2. Utilisation selon la revendication 1, caractérisée en ce que le traitement au plasma à basse température est réalisé dans une gamme de fréquences comprises entre 5 kHz et 10 GHz.

3. Utilisation selon la revendication 2, caractérisée en ce que le traitement au plasma est réalisé dans une gamme de fréquences comprises entre 13,56 MHz et 2,45 GHz.

4. Utilisation selon l'une des revendications précédentes, caractérisée en ce que le traitement au plasma est réalisé avec des fréquences variables.

5. Utilisation selon l'une des revendications précédentes, caractérisée en ce que le traitement au plasma est réalisé avec une combinaison de différentes hautes fréquences variables.

6. Utilisation selon l'une des revendications précédentes, caractérisée en ce que l'on utilise comme polyoléfines du polyéthylène et/ou du polypropylène.

7. Utilisation selon l'une des revendications précédentes, caractérisée en ce que le traitement au plasma est réalisé sous apport d'un gaz inerte.

8. Utilisation selon la revendication 7, caractérisée en ce que l'on utilise comme gaz inerte de l'hélium et/ou de l'argon.

9. Utilisation selon l'une des revendications précédentes, caractérisée en ce que le traitement au plasma est réalisé sous apport d'un gaz de réaction.

10. Utilisation selon la revendication 9, caractérisée en ce que l'on utilise comme gaz de réaction de l'oxygène et/ou de l'azote.

11. Utilisation selon l'une des revendications précédentes, caractérisée en ce que le traitement au plasma est réalisé successivement avec un plasma de gaz inerte et au moins un plasma de gaz de réaction ou au moins un plasma d'un mélange de gaz de réaction ou sous apport d'un mélange composé d'au moins un gaz inerte et d'au moins un gaz de réaction.

12. Utilisation selon l'une des revendications précédentes, caractérisée en ce que le traitement au plasma se produit à une pression de procédé comprise entre 0,1 mbar et 2 mbars.

13. Utilisation selon la revendication 12, caractérisée en ce que le traitement au plasma se produit à une pression de procédé comprise entre 0,3 mbar et 1 mbar.

14. Utilisation selon l'une des revendications précédentes, caractérisée en ce que la durée du traitement au plasma est comprise entre 5 secondes et 800 secondes.

15. Utilisation selon la revendication 14, caractérisée en ce que la durée du traitement au plasma est comprise entre 15 secondes et 600 secondes.

16. Utilisation selon l'une des revendications précédentes, caractérisée en ce que les polyoléfines sont soumises au traitement au plasma sous la forme d'une poudre ou de granulés.

17. Utilisation selon l'une des revendications précédentes, caractérisée en ce que les polyoléfines sont déplacées pendant le traitement au plasma.

18. Utilisation selon la revendication 17, caractérisée en ce que les polyoléfines sont mises en circulation dans un tambour rotatif à une vitesse comprise entre 4 et 20 tours par minute.

19. Utilisation selon l'une des revendications précédentes, caractérisée en ce que les polyoléfines sont utilisées sous la forme de produits neufs et/ou de produits de recyclage.

20. Utilisation selon l'une des revendications précédentes, caractérisée en ce que l'on ajoute aux polyoléfines des additifs plastiques usuels avant le traitement au plasma.

21. Utilisation selon la revendication 20, caractérisée en ce que l'on ajoute des agents stabilisants.
